# EUROPEAN PATENT APPLICATION

(11) **EP 4 765 357 A1**
(43) Date of publication of application: **24.06.2026**
(21) Application number: 25225953.6
(22) Date of filing: 19.12.2025
(51) Int. Cl.: H01M 50/103, H01M 50/15, H01M 50/176, H01M 50/553, H01M 50/567, H01M 50/593

(54) **CAP ASSEMBLY OF SECONDARY BATTERY**

(30) Priority: 23.12.2024 KR 20240194055; 21.04.2025 KR 20250051703
(71) Applicant: SK On Co., Ltd., Seoul 03161 (KR)
(72) Inventor: KWAK, Seung Ho, 34124 Daejeon (KR)
(74) Representative: Prüfer & Partner mbB Patentanwälte · Rechtsanwälte

(57) **Abstract**

The present disclosure relates to a cap assembly of a secondary battery. The cap assembly of the secondary battery includes: a current collector including a positive electrode terminal and a negative electrode terminal; a cap plate which the positive electrode terminal and the negative electrode terminal penetrate and which includes a protrusion portion respectively surrounding an outer circumference of the positive electrode terminal and an outer circumference of the negative electrode terminal; a first insulating member which the positive electrode terminal and the negative electrode terminal penetrate and which is disposed between the current collector and the cap plate; a bracket respectively disposed between the protrusion portion and the positive electrode terminal and between the protrusion portion and the negative electrode terminal; and a second insulating member respectively disposed between the bracket and the protrusion portion.

## Description

### BACKGROUND OF THE INVENTION

### 1. Field

The present disclosure relates to a cap assembly of a secondary battery, and more particularly, to a cap assembly of a secondary battery in which a welding process between the cap assembly and electrode terminals is omitted, thereby simplifying a manufacturing process.

### 2. Description of the Related Art

Rechargeable and dischargeable battery cells among battery cells are used in portable small electronic devices such as mobile phones or camcorders, or a plurality of the battery cells are connected and used as a power source for a driving motor such as a hybrid vehicle.

Such battery cells are manufactured in various shapes, and among them, a prismatic battery cell is generally configured to accommodate, in a case, an electrode assembly including a positive electrode plate and a negative electrode plate alternately stacked, together with an electrolyte, and to seal the case with a cap assembly including a current collector that is electrically connected to the positive electrode and the negative electrode of the electrode assembly.

The current collector includes a positive electrode terminal and a negative electrode terminal which are electrode terminals respectively electrically connected to the positive electrode and the negative electrode of the electrode assembly, and the positive electrode terminal and the negative electrode terminal penetrate a cap plate of the cap assembly and are exposed to the outside of the cap assembly.

Such electrode terminals need to be fixed in position by being coupled to the cap plate so as to be electrically connected with an external device in a stable manner, and in the related art, the electrode terminal penetrating the cap plate and a terminal of a metal material which is disposed on the cap plate and surrounds the electrode terminal have been welded to couple the electrode terminal and the cap plate.

When performing a welding process to weld the electrode terminal and the terminal as described above, manufacturing cost of the cap assembly becomes higher and manufacturing time becomes longer as compared to a case where the welding process is not performed.

### SUMMARY OF THE INVENTION

An object of the present disclosure is to provide a cap assembly of a secondary battery in which manufacturing cost can be reduced.

Another object of the present disclosure is to provide a cap assembly of a secondary battery in which manufacturing time can be shortened.

Meanwhile, the present disclosure can be widely applied to fields of green technology such as an electric vehicle, a battery charging station, and an energy storage system (ESS), and photovoltaics, wind power, and the like using batteries. In addition, the present disclosure can be used for eco-friendly mobility including an electric vehicle and a hybrid vehicle to prevent climate change by suppressing air pollution and greenhouse gas emission.

As a technical means for achieving the above-described technical objects, a cap assembly of a secondary battery according to an embodiment of the present disclosure may include: a current collector including a positive electrode terminal that is electrically connected to a positive electrode of an electrode assembly and a negative electrode terminal that is electrically connected to a negative electrode of the electrode assembly; a cap plate which the positive electrode terminal and the negative electrode terminal penetrate and which includes, on one surface, a protrusion portion respectively surrounding an outer circumference of the positive electrode terminal and an outer circumference of the negative electrode terminal; a first insulating member which the positive electrode terminal and the negative electrode terminal penetrate and which is disposed between the current collector and the cap plate; a bracket respectively disposed between the protrusion portion and the positive electrode terminal and between the protrusion portion and the negative electrode terminal; and a second insulating member respectively disposed between the bracket and the protrusion portion.

In an embodiment, the bracket may include a hole or a groove, and a cross-section of the bracket parallel to the cap plate may include any one or more of a circular shape, an elliptical shape, a triangular shape, a quadrangular shape, and a polygonal shape.

In an embodiment, the positive electrode terminal and the negative electrode terminal may be respectively formed with a step so as to have a seating surface on which the bracket is seated, and the protrusion portion may be bent at least in part so as to press the bracket such that movement of the bracket is prevented.

In an embodiment, the positive electrode terminal and the negative electrode terminal may be respectively formed such that a cross-section in a horizontal direction which is a direction parallel to one surface of the cap plate is circular, and the cap plate may be formed such that, in order to prevent contact with the positive electrode terminal, a diameter of the cross-section in the horizontal direction of a first through-hole through which the positive electrode terminal penetrates is larger than a diameter of the cross-section in the horizontal direction of the positive electrode terminal located in the first through-hole, and in order to prevent contact with the negative electrode terminal, a diameter of the cross-section in the horizontal direction of a second through-hole through which the negative electrode terminal penetrates is larger than a diameter of the cross-section in the horizontal direction of the negative electrode terminal located in the second through-hole.

In an embodiment, the bracket disposed between the protrusion portion and the positive electrode terminal may be formed to support at least a portion of an outer circumferential surface of the positive electrode terminal so as to prevent the positive electrode terminal from moving in the horizontal direction, and the bracket disposed between the protrusion portion and the negative electrode terminal may be formed to support at least a portion of an outer circumferential surface of the negative electrode terminal so as to prevent the negative electrode terminal from moving in the horizontal direction.

In an embodiment, the bracket may be formed with a receiving hole having a circular cross-section in the horizontal direction such that the positive electrode terminal or the negative electrode terminal penetrates therethrough, and a diameter of the cross-section in the horizontal direction of the positive electrode terminal located in the receiving hole may be identical to a diameter of the cross-section in the horizontal direction of the receiving hole, and a diameter of the cross-section in the horizontal direction of the negative electrode terminal located in the receiving hole may be identical to a diameter of the cross-section in the horizontal direction of the receiving hole.

In an embodiment, insulating members may be respectively disposed between the cap plate and the positive electrode terminal, and between the cap plate and the negative electrode terminal.

In an embodiment, the current collector may further include: an insulating portion of which one surface is disposed to face the electrode assembly; a positive electrode plate which is disposed on another surface of the insulating portion and is electrically connected to the positive electrode and the positive electrode terminal; and a negative electrode plate which is disposed on another surface of the insulating portion so as to be spaced apart from the positive electrode plate by a predetermined distance and is electrically connected to the negative electrode and the negative electrode terminal.

In an embodiment, the positive electrode terminal may be integrally formed with the positive electrode plate, and the negative electrode terminal may be integrally formed with the negative electrode plate.

In an embodiment, a vent hole may be formed in the cap plate, and a vent that is opened when a force equal to or greater than a predetermined size is applied to the vent hole may be coupled to the vent hole, and the first insulating member may include one or more openings, and any one or more of the openings may be formed at a position facing the vent.

As a technical means for solving the above-described technical objects, a cap assembly of a secondary battery according to another embodiment of the present disclosure may include: a current collector including a positive electrode terminal that is electrically connected to a positive electrode of an electrode assembly and a negative electrode terminal that is electrically connected to a negative electrode of the electrode assembly; a cap plate which the positive electrode terminal and the negative electrode terminal penetrate and which includes, on one surface, a protrusion portion respectively surrounding an outer circumference of the positive electrode terminal and an outer circumference of the negative electrode terminal; a first insulating member which the positive electrode terminal and the negative electrode terminal penetrate and which is disposed between the current collector and the cap plate; a bracket respectively disposed inside the protrusion portion so as to cover the positive electrode terminal and the negative electrode terminal; and a second insulating member respectively disposed between the bracket and the protrusion portion, and the protrusion portion may be bent at least in part so as to press the bracket such that movement of the bracket is prevented.

In an embodiment, the positive electrode terminal and the negative electrode terminal may be respectively formed with a protrusion portion protruding toward the bracket, and the bracket may be formed with a receiving groove that receives the protrusion portion formed on the positive electrode terminal or the protrusion portion formed on the negative electrode terminal, and the positive electrode terminal may be prevented from moving in the horizontal direction as the protrusion portion of the positive electrode terminal is received in the receiving groove, and the negative electrode terminal may be prevented from moving in the horizontal direction as the protrusion portion of the negative electrode terminal is received in the receiving groove.

In an embodiment, the positive electrode terminal and the negative electrode terminal may be respectively formed such that a cross-section in a horizontal direction parallel to one surface of the cap plate is circular, and the cap plate may be formed such that, in order to prevent contact with the positive electrode terminal, a diameter of the cross-section in the horizontal direction of a first through-hole through which the positive electrode terminal penetrates is larger than a diameter of the cross-section in the horizontal direction of the positive electrode terminal located in the first through-hole, and in order to prevent contact with the negative electrode terminal, a diameter of the cross-section in the horizontal direction of a second through-hole through which the negative electrode terminal penetrates is larger than a diameter of the cross-section in the horizontal direction of the negative electrode terminal located in the second through-hole.

In an embodiment, insulating members may be respectively disposed between the cap plate and the positive electrode terminal, and between the cap plate and the negative electrode terminal.

In an embodiment, the current collector may further include: an insulating portion of which one surface is disposed to face the electrode assembly; a positive electrode plate which is disposed on another surface of the insulating portion and is electrically connected to the positive electrode and the positive electrode terminal; and a negative electrode plate which is disposed on another surface of the insulating portion so as to be spaced apart from the positive electrode plate by a predetermined distance and is electrically connected to the negative electrode and the negative electrode terminal.

In an embodiment, the positive electrode terminal may be integrally formed with the positive electrode plate, and the negative electrode terminal may be integrally formed with the negative electrode plate.

In an embodiment, a vent hole may be formed in the cap plate, and a vent that is opened when a force equal to or greater than a predetermined size is applied to the vent hole may be coupled to the vent hole, and the first insulating member may include one or more openings, and any one or more of the openings may be formed at a position facing the vent.

In another aspect of the present disclosure, a secondary battery may include the cap assembly of the secondary battery described above.

In still another aspect of the present disclosure, a method of manufacturing a secondary battery may include: an electrode assembly preparing step of aligning one or more electrode assemblies having a positive electrode and a negative electrode on one surface such that the positive electrode and the negative electrode face a first direction; and a cap assembly providing step of providing a cap assembly that is electrically connected to the positive electrode and the negative electrode of the electrode assembly while maintaining the first direction, and the cap assembly may include the cap assembly of the secondary battery described above.

Specific details of other embodiments for solving the objects are included in the description of the invention and the drawings.

According to the embodiment of the present disclosure described above, since the cap assembly of the secondary battery according to the present disclosure is configured such that a protrusion portion included in the cap plate is bent to prevent movement of a bracket that constrains an electrode terminal, the electrode terminal can be coupled to the cap plate without performing a welding process, thereby providing an effect of reducing manufacturing cost of the cap assembly.

In addition, since the electrode terminal can be coupled to the cap plate without performing a welding process, time required to perform a welding process is not needed, thereby providing an effect of shortening manufacturing time of the cap assembly.

In addition, since the electrode terminal and the cap plate can be insulated without disposing an insulating member between the electrode terminal and the cap plate, an effect of reducing cost for disposing an insulating member in the cap assembly can be provided.

### BRIEF DESCRIPTION OF THE DRAWINGS

FIG. 1 is a view illustrating a secondary battery including a cap assembly of a secondary battery.
FIG. 2 is an exploded perspective view of a cap assembly of a secondary battery according to an embodiment of the present disclosure.
FIG. 3 is a view illustrating a side cross-sectional view of a positive electrode terminal of FIG. 2.
FIG. 4 is a view illustrating an enlarged side cross-sectional view of A of the cap plate of FIG. 2.
FIG. 5 is a view illustrating a part of a side cross-sectional view of a cap assembly of a secondary battery according to an embodiment of the present disclosure, showing a state in which a bracket is disposed inside a protrusion portion.
FIG. 6 is a view for explaining a process in which the protrusion portion and the second insulating member are bent to press the bracket.
FIG. 7 is a plan view of A of the cap plate of FIG. 2.
FIG. 8 is a plan view of the positive electrode terminal of FIG. 2.
FIG. 9 is a plan view of the bracket of FIG. 2.
FIG. 10 is a view illustrating a part of a side cross-sectional view of a cap assembly of a secondary battery according to an embodiment of the present disclosure, showing a state in which an insulating member is disposed.
FIG. 11 is a cross-sectional view of a bracket according to another embodiment of the present disclosure.
FIG. 12 is an exploded perspective view of a cap assembly of a secondary battery according to still another embodiment of the present disclosure.
FIG. 13 is a view illustrating a side cross-sectional view of a positive electrode terminal of FIG. 12.
FIG. 14 is a view illustrating an enlarged side cross-sectional view of B of the cap plate of FIG. 12.
FIG. 15 is a view illustrating a part of a side cross-sectional view of a cap assembly of a secondary battery according to another embodiment of the present disclosure, showing a state in which a bracket is disposed inside a protrusion portion.
FIG. 16 is a view illustrating a part of a side cross-sectional view of a cap assembly of a secondary battery according to another embodiment of the present disclosure, showing a state in which a positive electrode terminal is coupled to the bracket.
FIG. 17 is a view illustrating a part of a side cross-sectional view of a cap assembly of a secondary battery according to another embodiment of the present disclosure, showing a state in which an insulating member is disposed.
FIG. 18 is a flowchart illustrating a method of manufacturing a secondary battery according to an embodiment of the present disclosure.
FIG. 19 is a schematic view illustrating the method of manufacturing a secondary battery of FIG. 18.
FIG. 20 is a schematic view illustrating a conventional method of manufacturing a secondary battery.

### DETAILED DESCRIPTION

Hereinafter, exemplary embodiments of the present application will be described in detail with reference to the accompanying drawings so that those skilled in the art to which the present application pertains can easily carry out the present application. However, the present application may be embodied in various different forms and is not limited to the embodiments described herein. In addition, portions not related to the description are omitted in the drawings in order to clearly describe the present application, and like reference numerals are designated to like parts throughout the entire specification.

Throughout the present specification, when a part is said to be "connected" to another part, this includes not only being "directly connected" but also being "electrically connected" with another element interposed therebetween.

Throughout the present specification, when a member is said to be located "on" another member, this includes not only cases in which the member is in contact with the other member but also cases in which another member is present between the two members.

Throughout the present specification, when a part "includes" a component, this does not exclude other components unless otherwise stated, but means that the part may further include other components. Throughout the present specification, degree terms such as "about," "substantially," and the like are used in the meaning close to the numerical values when manufacturing and material tolerances inherent in the stated meanings are presented, and are used to prevent an unscrupulous infringer from unfairly exploiting disclosures in which precise or absolute numerical values are mentioned only for better understanding of the present application. Throughout the present specification, degree terms "a step of ~" or "a step of ~ing" do not mean "a step for ~."

Hereinafter, preferred embodiments of the present disclosure will be described in detail with reference to the accompanying drawings and the contents described below. However, the present disclosure is not limited to the embodiments described herein and may be implemented in other forms. Like reference numerals throughout the entire specification denote like components.

Hereinafter, the configuration of a cap assembly of a secondary battery according to an embodiment of the present disclosure will be described.

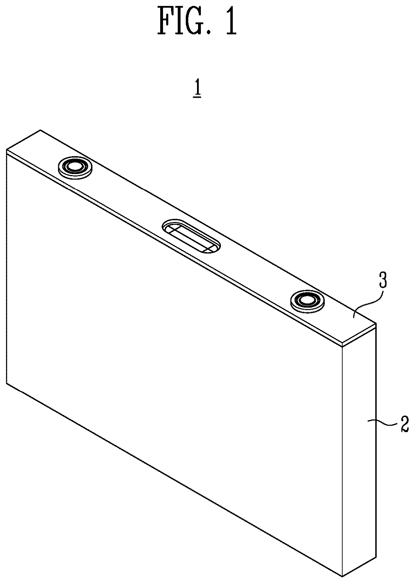

FIG. 1 is a view illustrating a secondary battery including a cap assembly of a secondary battery.

As illustrated in FIG. 1, a cap assembly 3 of a secondary battery may be coupled to an open side of a case 2 of the secondary battery 1 that accommodates an electrode assembly, and may seal the case 2.

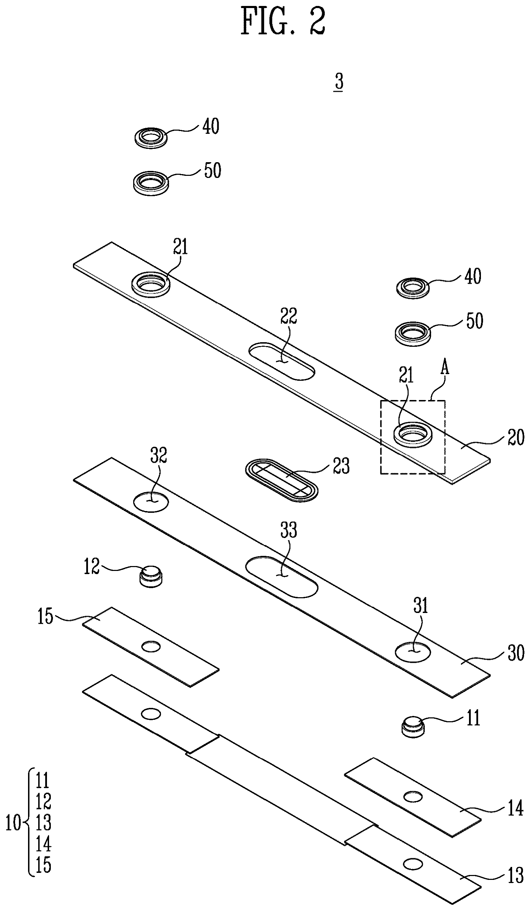

FIG. 2 is an exploded perspective view of a cap assembly of a secondary battery according to an embodiment of the present disclosure.

Referring to FIG. 2, a cap assembly 3 of a secondary battery includes a current collector 10, a cap plate 20, a first insulating member 30, a bracket 40, and a second insulating member 50.

First, the current collector 10 will be described.

The current collector 10 includes a positive electrode terminal 11 that is electrically connected to a positive electrode of an electrode assembly and a negative electrode terminal 12 that is electrically connected to a negative electrode of the electrode assembly.

The electrode assembly may include a positive electrode, a negative electrode, and a separator disposed between the positive electrode and the negative electrode.

The positive electrode may be formed by coating a positive electrode current collector plate formed of a metal foil such as aluminum with a positive electrode active material such as a transition metal oxide.

In addition, the positive electrode includes a positive electrode non-coating portion which is a region where the positive electrode active material is not coated, and the positive electrode non-coating portion is electrically connected to the positive electrode terminal 11 to serve as a passage of current flow between the positive electrode and the outside.

The negative electrode may be formed by coating a negative electrode current collector plate formed of a metal foil such as copper or nickel with a negative electrode active material such as graphite or carbon.

In addition, the negative electrode includes a negative electrode non-coating portion which is a region where the negative electrode active material is not coated, and the negative electrode non-coating portion is electrically connected to the negative electrode terminal 12 to serve as a passage of current flow between the negative electrode and the outside.

The separator is positioned between the positive electrode and the negative electrode to prevent a short circuit and to allow movement of lithium ions. The separator may be formed of polyethylene, polypropylene, or a composite film of polyethylene and polypropylene.

The positive electrode terminal 11 may be formed of a material that conducts electricity and may also be formed of the same material as the positive electrode non-coating portion.

Hereinafter, a surface viewed in a direction facing one surface of the cap plate 20 is referred to as a plan view, and a surface viewed in a direction facing a surface that is perpendicular to one surface of the cap plate 20 and connects the protrusion portions 21 is referred to as a side view.

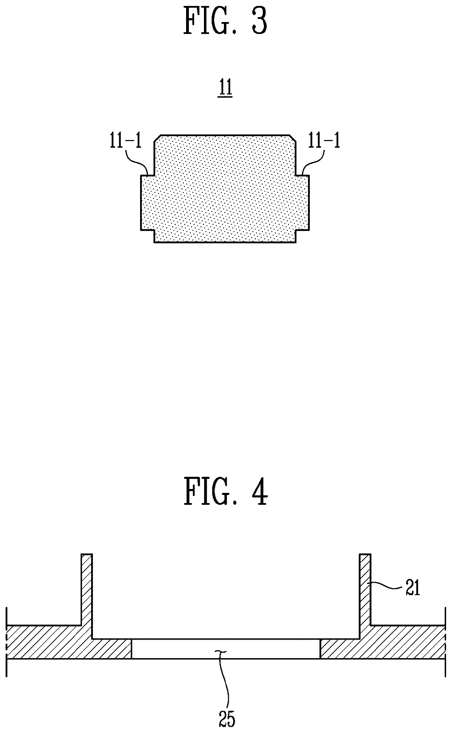

FIG. 3 is a view illustrating a side cross-sectional view of a positive electrode terminal of FIG. 2.

Referring to FIG. 3, the positive electrode terminal 11 may have a seating surface 11-1 formed by a step. The seating surface 11-1 may be formed as a flat surface or may be formed as a curved surface, and may contact a bracket 40 to be described later.

Although not illustrated in the drawing, the negative electrode terminal 12 may also be formed in the same shape as the positive electrode terminal 11.

That is, the positive electrode terminal 11 and the negative electrode terminal 12 may be respectively formed with a step so as to have a seating surface on which the bracket 40 is seated.

Meanwhile, referring to FIG. 2, the current collector 10 may further include an insulating portion 13, a positive electrode plate 14, and a negative electrode plate 15.

The insulating portion 13 may be formed of an insulating material that does not conduct electricity, and one surface thereof may be disposed to face the electrode assembly.

The positive electrode plate 14 may be formed of a material that conducts electricity, may be disposed on another surface of the insulating portion 13, and may be electrically connected to the positive electrode and the positive electrode terminal 11.

For example, a positive electrode non-coating portion and the positive electrode terminal 11 may be coupled to the positive electrode plate 14 through welding or the like.

In another example, the positive electrode terminal 11 may be integrally formed with the positive electrode plate 14, and a positive electrode non-coating portion may be coupled to the positive electrode plate 14 through welding or the like.

The negative electrode plate 15 may be formed of a material that conducts electricity, may be disposed on another surface of the insulating portion 13 so as to be spaced apart from the positive electrode plate 14 by a predetermined distance, and may be electrically connected to the negative electrode and the negative electrode terminal 12.

For example, a negative electrode non-coating portion and the negative electrode terminal 12 may be coupled to the negative electrode plate 15 through welding or the like.

In another example, the negative electrode terminal 12 may be integrally formed with the negative electrode plate 15, and a negative electrode non-coating portion may be coupled to the negative electrode plate 15 through welding or the like.

Next, the cap plate 20 will be described.

Referring to FIG. 2, the cap plate 20 is penetrated by the positive electrode terminal 11 and the negative electrode terminal 12 and includes, on one surface, a protrusion portion 21 that respectively surrounds an outer circumference of the positive electrode terminal 11 and an outer circumference of the negative electrode terminal 12.

FIG. 4 is a view illustrating an enlarged side cross-sectional view of A of the cap plate of FIG. 2.

Referring to FIG. 4, the protrusion portion 21 may be formed to protrude in a direction perpendicular to one surface of the cap plate 20 so as to surround a first through-hole 25 formed in the cap plate 20 through which the positive electrode terminal 11 penetrates, and may be bent.

Likewise, the protrusion portion 21 may be formed to protrude in a direction perpendicular to one surface of the cap plate 20 so as to surround a second through-hole formed in the cap plate 20 through which the negative electrode terminal 12 penetrates, and may be bent.

The protrusion portion 21 may be formed in a hollow cylindrical shape capable of being bent or a hollow polygonal column shape capable of being bent, but the shape of the protrusion portion 21 is not limited thereto.

In addition, a vent hole 22 may be formed in the cap plate 20, and a vent 23 that is opened when a force equal to or greater than a predetermined size is applied to the vent hole 22 may be coupled to the vent hole 22.

The vent 23 may perform a function of being opened when an internal pressure of the secondary battery 1 including the cap assembly 3 becomes equal to or greater than a predetermined set pressure, thereby preventing the internal pressure of the secondary battery 1 from exceeding the predetermined set pressure.

Next, the first insulating member 30 will be described.

The first insulating member 30 may be penetrated by the positive electrode terminal 11 and the negative electrode terminal 12, and may be disposed between the current collector 10 and the cap plate 20.

For example, the first insulating member 30 may be provided with one or more openings. The openings may include first to third openings 31, 32, 33. The first and second openings 31 and 32 may be disposed spaced apart from each other at one end and the other end of the first insulating member 30, respectively. The third opening 33 may be disposed between the first and second openings 31 and 32.

In the first insulating member 30, the positive electrode terminal 11 may penetrate the first opening 31, and the negative electrode terminal 12 may penetrate the second opening 32. The positive electrode terminal 11 and the negative electrode terminal 12 may respectively protrude outwardly of the first insulating member 30 through the first and second openings 31 and 32.

The first insulating member 30 may be formed of a material that does not conduct electricity and may perform a function of insulating the current collector 10 and the cap plate 20.

In addition, any one or more of the openings provided in the first insulating member 30 may be formed at a position facing the vent 23. Specifically, in order to allow fluid to move to the opened vent 23 when the vent 23 is opened, the third opening 33 may be formed at a position facing the vent 23 in the first insulating member 30.

Next, the bracket 40 will be described.

The bracket 40 may be respectively disposed between the protrusion portion 21 and the positive electrode terminal 11, and between the protrusion portion 21 and the negative electrode terminal 12.

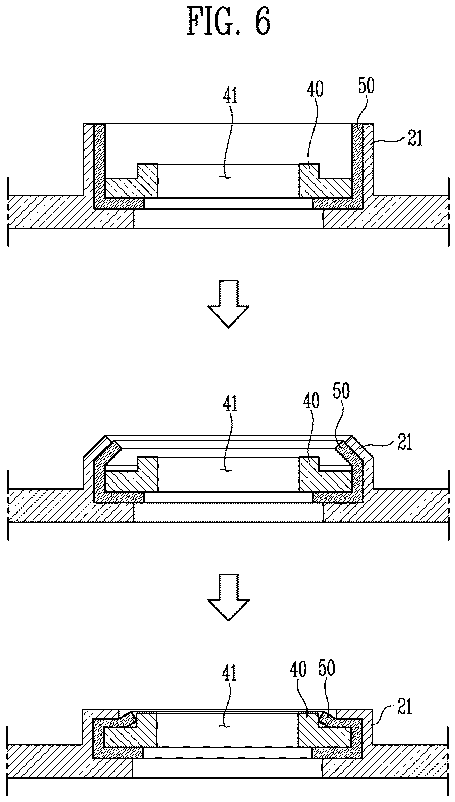

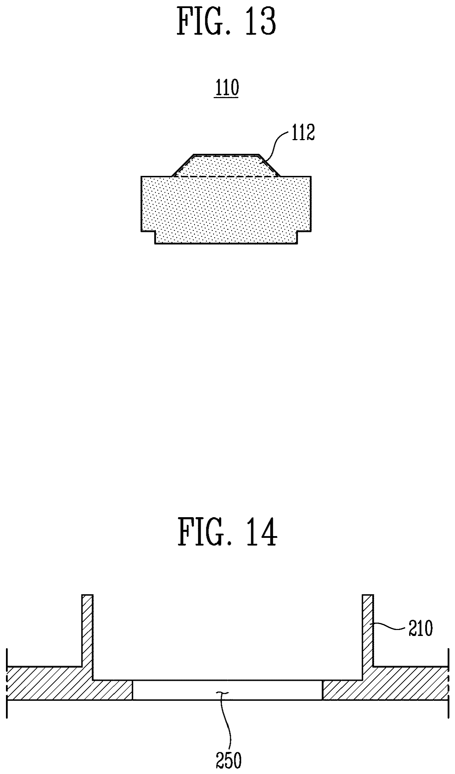

The bracket 40 may include a hole or a groove. Specifically, the bracket 40 may include a receiving hole 41 (see FIG. 6) formed in the shape of a hole through which the positive electrode terminal 11 or the negative electrode terminal 12 penetrates, or may include a receiving groove 410 (see FIG. 14) formed in the shape of a groove corresponding to an outer surface of the positive electrode terminal or the negative electrode terminal so as to cover one surface of the positive electrode terminal or the negative electrode terminal.

The bracket 40 may be provided in the form of the receiving hole 41 to fix the positive electrode terminal 11 or the negative electrode terminal 12. In addition, the bracket 40 may be provided in the form of the receiving groove 410 (see FIG. 14) to fix the positive electrode terminal or the negative electrode terminal while simultaneously protecting the outermost protruding surface of the positive electrode terminal or the negative electrode terminal.

In the following embodiments, the bracket 40 provided in the form of the receiving hole 41 will be described first, and in another embodiment of the present disclosure, a bracket provided in the form of a hollow structure that is a receiving groove 410 (see FIG. 14) will be described, but the present disclosure is not limited thereto.

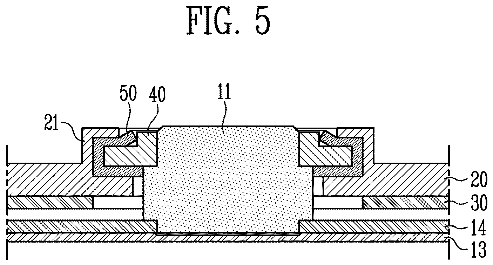

FIG. 5 is a view illustrating a part of a side cross-sectional view of a cap assembly of a secondary battery according to an embodiment of the present disclosure, showing a state in which a bracket is disposed inside a protrusion portion.

The bracket 40 may be formed of a material that conducts electricity, and as illustrated in FIG. 5, may be disposed between the protrusion portion 21 and the positive electrode terminal 11.

Specifically, the bracket 40 may be disposed inside the protrusion portion 21 so as to surround at least a portion of an outer circumferential surface of the positive electrode terminal 11 while at least a portion thereof is seated on the seating surface 11-1 of the positive electrode terminal 11.

At this time, at least a portion of the bracket 40 seated on the seating surface 11-1 of the positive electrode terminal 11 may be formed in a shape corresponding to the shape of the seating surface 11-1 of the positive electrode terminal 11 so as to be in close contact with the seating surface 11-1 of the positive electrode terminal 11.

For example, when the seating surface 11-1 of the positive electrode terminal 11 is formed as a flat surface, at least a portion of the bracket 40 seated on the seating surface 11-1 of the positive electrode terminal 11 may be formed in a flat shape, and when the seating surface 11-1 of the positive electrode terminal 11 is formed as a curved surface, at least a portion of the bracket 40 seated on the seating surface 11-1 of the positive electrode terminal 11 may be formed in a curved shape.

The bracket 40 may also be disposed between the protrusion portion 21 and the negative electrode terminal 12.

Specifically, the bracket 40 may be disposed inside the protrusion portion 21 so as to surround at least a portion of an outer circumferential surface of the negative electrode terminal 12 while at least a portion thereof is seated on the seating surface of the negative electrode terminal 12.

**At** this time, at least a portion of the bracket 40 seated on the seating surface of the negative electrode terminal 12 may be formed in a shape corresponding to the shape of the seating surface of the negative electrode terminal 12 so as to be in close contact with the seating surface of the negative electrode terminal 12.

For example, when the seating surface of the negative electrode terminal 12 is formed as a flat surface, at least a portion of the bracket 40 seated on the seating surface of the negative electrode terminal 12 may be formed in a flat shape, and when the seating surface of the negative electrode terminal 12 is formed as a curved surface, at least a portion of the bracket 40 seated on the seating surface of the negative electrode terminal 12 may be formed in a curved shape.

Next, the second insulating member 50 will be described.

Referring to FIG. 5, the second insulating member 50 may be respectively disposed between the bracket 40 and the protrusion portion 21.

The second insulating member 50 may be formed of a material that does not conduct electricity, and by being disposed between the bracket 40 and the protrusion portion 21, may perform a function of insulating between the bracket 40, which is electrically connected to the positive electrode terminal 11 and the negative electrode terminal 12, and the protrusion portion 21.

Accordingly, the second insulating member 50 may insulate the positive electrode terminal 11 and the negative electrode terminal 12 from the cap plate 20 including the protrusion portion 21.

As such, when the bracket 40 and the second insulating member 50 are disposed between the protrusion portion 21 and the positive electrode terminal 11 or between the protrusion portion 21 and the negative electrode terminal 12, the protrusion portion 21 may be bent at least in part to restrain the bracket 40.

That is, as illustrated in FIG. 5, the protrusion portion 21 may be bent at least in part to press the bracket 40 so as to prevent movement of the bracket 40.

At this time, the bracket 40 is pressed by the bent protrusion portion 21 to prevent movement, and the positive electrode terminal 11 in contact with the bracket 40 is prevented from being moved in a direction away from the current collector 10 as the bracket 40 is seated on the seating surface 11-1 of the positive electrode terminal 11.

Therefore, by bending the protrusion portion 21 to press the bracket 40, movement of the positive electrode terminal 11 can be prevented.

Likewise, by bending the protrusion portion 21 to press the bracket 40, movement of the negative electrode terminal 12 can also be prevented.

To bend the protrusion portion 21, a bending mechanism and a pressing mechanism may be used.

FIG. 6 is a view for explaining a process in which the protrusion portion and the second insulating member are bent to press the bracket.

For example, referring to FIG. 6, when the bracket 40 and the second insulating member 50 are disposed inside the protrusion portion 21 formed in a direction perpendicular to one surface of the cap plate 20, the protrusion portion 21 may be bent through a bending mechanism that grips and bends an object.

In addition, the bent protrusion portion 21 may be pressed through a pressing mechanism that applies pressure to an object to compress the object.

The cap plate 20 and the positive electrode terminal 11 and the cap plate 20 and the negative electrode terminal 12 may be configured to be insulated from each other.

Specifically, the positive electrode terminal 11 and the negative electrode terminal 12 may each be formed such that a cross-section in a horizontal direction, which is a direction parallel to one surface of the cap plate 20 (hereinafter referred to as a horizontal direction), is circular.

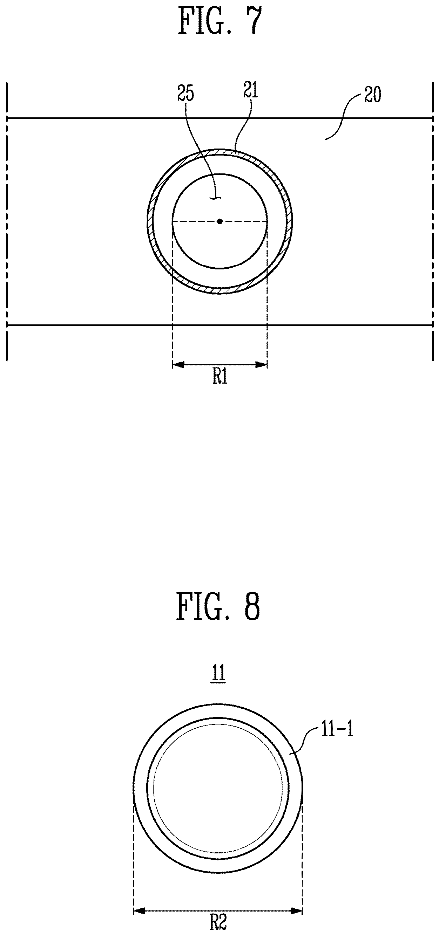

FIG. 7 is a plan view of A of the cap plate of FIG. 2.

And, as illustrated in FIG. 7, a diameter of a cross-section in the horizontal direction of the first through-hole 25 through which the positive electrode terminal 11 penetrates may be a first diameter R1.

FIG. 8 is a plan view of the positive electrode terminal of FIG. 2.

In addition, as illustrated in FIG. 8, a diameter of a cross-section in the horizontal direction of the positive electrode terminal 11 located in the first through-hole 25 may be a second diameter R2.

At this time, the cap plate 20 may be formed such that a diameter R1 of the cross-section in the horizontal direction of the first through-hole 25 is larger than a diameter R2 of the cross-section in the horizontal direction of the positive electrode terminal 11 located in the first through-hole 25, so that contact with the positive electrode terminal 11 is prevented.

Likewise, the cap plate 20 may be formed such that a diameter of the cross-section in the horizontal direction of a second through-hole through which the negative electrode terminal 12 penetrates is larger than a diameter of the cross-section in the horizontal direction of the negative electrode terminal 12 located in the second through-hole, so that contact with the negative electrode terminal 12 is prevented.

That is, the cap plate 20 may be insulated from the positive electrode terminal 11 and the negative electrode terminal 12 by preventing contact with the positive electrode terminal 11 and the negative electrode terminal 12.

The bracket 40 may be formed so as to more effectively prevent the cap plate 20 from contacting the positive electrode terminal 11 and the negative electrode terminal 12.

Specifically, the bracket 40 disposed between the protrusion portion 21 and the positive electrode terminal 11 may be formed to support at least a portion of an outer circumferential surface of the positive electrode terminal 11 so as to prevent the positive electrode terminal 11 from moving in the horizontal direction.

Likewise, the bracket 40 disposed between the protrusion portion 21 and the negative electrode terminal 12 may be formed to support at least a portion of an outer circumferential surface of the negative electrode terminal 12 so as to prevent the negative electrode terminal 12 from moving in the horizontal direction.

That is, the bracket 40 may be configured to support the positive electrode terminal 11 so as to prevent the positive electrode terminal 11 from moving in the horizontal direction and contacting an inner circumferential surface of the cap plate 20 in which the first through-hole 25 is formed, and may be configured to support the negative electrode terminal 12 so as to prevent the negative electrode terminal 12 from moving in the horizontal direction and contacting an inner circumferential surface of the cap plate 20 in which the second through-hole is formed.

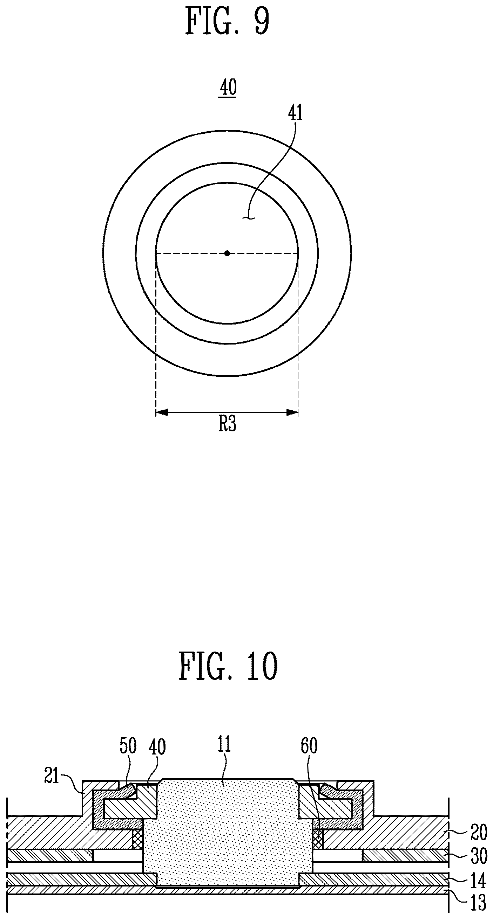

FIG. 9 is a plan view of the bracket of FIG. 2.

More specifically, as illustrated in FIG. 9, a receiving hole 41 having a circular cross-section in the horizontal direction may be formed in the bracket 40 such that the positive electrode terminal 11 or the negative electrode terminal 12 penetrates therethrough.

In addition, a diameter R2 of the cross-section in the horizontal direction of the positive electrode terminal 11 located in the receiving hole 41 may be identical to a diameter R3 of the cross-section in the horizontal direction of the receiving hole 41, and a diameter of the cross-section in the horizontal direction of the negative electrode terminal 12 located in the receiving hole 41 may also be identical to the diameter R3 of the cross-section in the horizontal direction of the receiving hole 41.

That is, the bracket 40 may be configured to support the positive electrode terminal 11 and the negative electrode terminal 12 such that no gap occurs between the bracket 40 and the positive electrode terminal 11 penetrating the receiving hole 41 and between the bracket 40 and the negative electrode terminal 12 penetrating the receiving hole 41, thereby preventing the positive electrode terminal 11 and the negative electrode terminal 12 from moving in the horizontal direction.

Accordingly, the positive electrode terminal 11 and the negative electrode terminal 12 may be effectively prevented from contacting the cap plate 20, and may be effectively insulated from the cap plate 20.

Meanwhile, instead of insulating the positive electrode terminal 11 and the negative electrode terminal 12 from the cap plate 20 by preventing the positive electrode terminal 11 and the negative electrode terminal 12 from contacting the cap plate 20, an insulating member 60 may be provided to insulate the positive electrode terminal 11 and the negative electrode terminal 12 from the cap plate 20.

That is, insulating members 60 may be respectively disposed between the cap plate 20 and the positive electrode terminal 11, and between the cap plate 20 and the negative electrode terminal 12.

FIG. 10 is a view illustrating a part of a side cross-sectional view of a cap assembly of a secondary battery according to an embodiment of the present disclosure, showing a state in which an insulating member is disposed.

Specifically, as illustrated in FIG. 10, an insulating member 60 formed of a material that does not conduct electricity may be disposed between the positive electrode terminal 11 penetrating the cap plate 20 and the cap plate 20, thereby insulating the positive electrode terminal 11 and the cap plate 20.

Likewise, an insulating member 60 may be disposed between the negative electrode terminal 12 penetrating the cap plate 20 and the cap plate 20, thereby insulating the negative electrode terminal 12 and the cap plate 20.

Hereinafter, the configuration of a cap assembly of a secondary battery according to another embodiment of the present disclosure will be described.

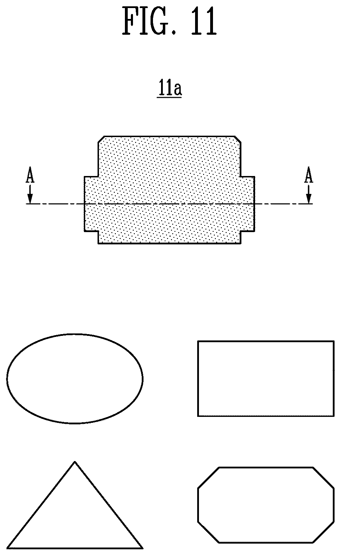

FIG. 11 is a cross-sectional view of a bracket according to another embodiment of the present disclosure.

Referring to FIG. 11, a cross-sectional view taken along A-A of a bracket 11a according to an embodiment of the present disclosure may include any one or more of a circular shape, an elliptical shape, a triangular shape, a quadrangular shape, and a polygonal shape in a cross-section parallel to the cap plate.

Specifically, the bracket 11a may be provided in a circular shape, thereby improving efficiency of an assembly process of the secondary battery.

In addition, the bracket 11a may be provided in a shape having an elliptical or quadrangular cross-section parallel to the cap plate, thereby being provided in an elongated form in one direction and allowing an increase in the cross-sectional area of the bracket 11a when the width of the cap plate is narrow.

Further, the bracket 11a may be provided in a shape having a triangular or polygonal cross-section parallel to the cap plate, and thus may guide the position of the bracket 11a so that assembly can be facilitated.

As described above, the bracket 11a according to an embodiment of the present disclosure may be provided in various shapes, and a member assembled with the bracket 11a may also be variously modified so as to correspond to the shape of the bracket 11a.

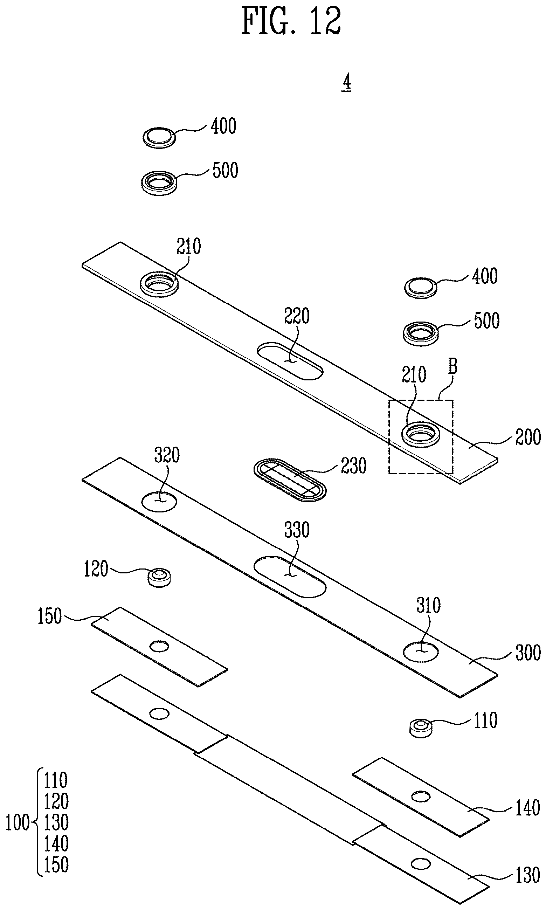

FIG. 12 is an exploded perspective view of a cap assembly of a secondary battery according to still another embodiment of the present disclosure.

Referring to FIG. 12, a cap assembly 4 of a secondary battery includes a current collector 100, a cap plate 200, a first insulating member 300, a bracket 400, and a second insulating member 500.

First, the current collector 100 will be described.

The current collector 100 includes a positive electrode terminal 110 electrically connected to the positive electrode of the electrode assembly, and a negative electrode terminal 120 electrically connected to the negative electrode of the electrode assembly.

Since the configuration of the electrode assembly is identical to the configuration of the electrode assembly of the cap assembly 3 of the secondary battery (see FIG. 2) described above, a detailed description will be omitted below.

The positive electrode terminal 110 may be formed of a material that conducts electricity and may also be formed of the same material as a positive electrode non-coating portion.

Hereinafter, a surface viewed in a direction toward one surface of the cap plate 200 is referred to as a planar surface, and a surface viewed in a direction toward a surface perpendicular to one surface of the cap plate 200 and connecting the protrusion portions 210 is referred to as a side surface. In addition, a direction parallel to one surface of the cap plate 200 is referred to as a horizontal direction.

FIG. 13 is a view illustrating a side cross-sectional view of a positive electrode terminal of FIG. 12.

Referring to FIG. 13, a protrusion portion 112 protruding in a direction toward the bracket 400 to be described later may be formed on the positive electrode terminal 110, and although not illustrated in the drawing, a protrusion portion may also be formed on the negative electrode terminal 120 in the same manner as the positive electrode terminal 110.

That is, the positive electrode terminal 110 and the negative electrode terminal 120 may each be formed with a protrusion portion 112 protruding in a direction toward the bracket 400.

Meanwhile, referring to FIG. 12, the current collector 100 may further include an insulating portion 130, a positive electrode plate 140, and a negative electrode plate 150.

Since the configurations of the insulating portion 130, the positive electrode plate 140, and the negative electrode plate 150 are identical to the configurations of the insulating portion 13, the positive electrode plate 14, and the negative electrode plate 15 of the cap assembly 3 of the secondary battery described above with reference to FIG. 2, a detailed description is omitted below.

Next, the cap plate 200 will be described.

Referring to FIG. 12, the cap plate 200 is penetrated by the positive electrode terminal 110 and the negative electrode terminal 120 and includes, on one surface, a protrusion portion 210 that respectively surrounds an outer circumference of the positive electrode terminal 110 and an outer circumference of the negative electrode terminal 120.

FIG. 14 is a view illustrating an enlarged side cross-sectional view of B of the cap plate of FIG. 12.

Referring to FIG. 14, the protrusion portion 210 may be formed to protrude in a direction perpendicular to one surface of the cap plate 200 so as to surround a first through-hole 250 formed in the cap plate 200 through which the positive electrode terminal 110 penetrates, and may be bent.

Likewise, the protrusion portion 210 may be formed to protrude in a direction perpendicular to one surface of the cap plate 200 so as to surround a second through-hole formed in the cap plate 200 through which the negative electrode terminal 120 penetrates, and may be bent.

The protrusion portion 210 may be formed in a hollow cylindrical shape capable of being bent or in a hollow polygonal column shape capable of being bent; however, the shape of the protrusion portion 210 is not limited thereto.

In addition, a vent hole 220 may be formed in the cap plate 200, and a vent 230 that is opened when a force equal to or greater than a predetermined magnitude is applied to the vent hole 220 may be coupled thereto.

The vent 230 may perform a function of being opened when a pressure inside the secondary battery including the cap assembly 4 becomes equal to or greater than a predetermined pressure, thereby preventing the pressure inside the secondary battery from becoming equal to or greater than the predetermined pressure.

Next, the first insulating member 300 will be described.

The first insulating member 300 may be penetrated by the positive electrode terminal 110 and the negative electrode terminal 120, and may be disposed between the current collector 100 and the cap plate 200.

For example, the first insulating member 300 may include a first opening 310 through which the positive electrode terminal 110 penetrates, and a second opening 320 through which the negative electrode terminal 120 penetrates.

The first insulating member 300 may be formed of a material that does not conduct electricity and may perform a function of insulating the current collector 100 and the cap plate 200.

In addition, in order for fluid to move to the opened vent 230 when the vent 230 is opened, the first insulating member 300 may further include a third opening 330 at a position facing the vent 230.

Next, the bracket 400 will be described.

The bracket 400 may be respectively disposed inside the protrusion portion 210 so as to cover the positive electrode terminal 110 and the negative electrode terminal 120.

The bracket 400 may include a hole or a groove. In addition, a cross-section of the bracket 400 parallel to the cap plate 200 may include any one or more of a circular shape, an elliptical shape, a triangular shape, a quadrangular shape, and a polygonal shape.

In the following embodiment, the bracket 400 is described as including a receiving groove 410 in the form of a groove; however, the present disclosure is not limited thereto.

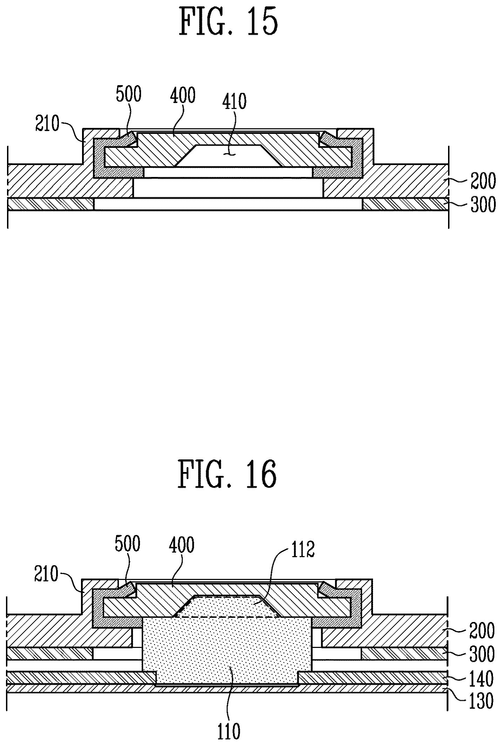

FIG. 15 is a view illustrating a part of a side cross-sectional view of a cap assembly of a secondary battery according to another embodiment of the present disclosure, showing a state in which a bracket is disposed inside a protrusion portion.

The bracket 400 may be formed of a material that conducts electricity and, as illustrated in FIG. 14, may be disposed inside the protrusion portion 210 to respectively cover the positive electrode terminal 110 and the negative electrode terminal 120.

Specifically, the bracket 400 may be respectively formed with a receiving groove 410 that receives the protrusion portion 112 formed on the positive electrode terminal 110 or the protrusion portion formed on the negative electrode terminal 120.

FIG. 16 is a view illustrating a part of a side cross-sectional view of a cap assembly of a secondary battery according to another embodiment of the present disclosure, showing a state in which a positive electrode terminal is coupled to the bracket.

As illustrated in FIG. 16, the protrusion portion 112 of the positive electrode terminal 110 may be received in the receiving groove 410, and although not illustrated in the drawing, the protrusion portion of the negative electrode terminal 120 may also be received in the receiving groove 410.

At this time, the receiving groove 410 of the bracket 400 that covers the positive electrode terminal 110 may be formed in a shape corresponding to the shape of the protrusion portion 112 of the positive electrode terminal 110 received in the receiving groove 410 so that no gap occurs between the protrusion portion 112 of the positive electrode terminal 110 and the bracket 400.

Likewise, the receiving groove 410 of the bracket 400 that covers the negative electrode terminal 120 may be formed in a shape corresponding to the shape of the protrusion portion of the negative electrode terminal 120 received in the receiving groove 410 so that no gap occurs between the protrusion portion of the negative electrode terminal 120 and the bracket 400.

Accordingly, movement of the positive electrode terminal 110 in the horizontal direction may be prevented as the protrusion portion 112 of the positive electrode terminal 110 is received in the receiving groove 410, and movement of the negative electrode terminal 120 in the horizontal direction may be prevented as the protrusion portion of the negative electrode terminal 120 is received in the receiving groove 410.

Next, the second insulating member 500 will be described.

Referring to FIG. 16, the second insulating member 500 may be respectively disposed between the bracket 400 and the protrusion portion 210.

The second insulating member 500 may be formed of an insulating material that does not conduct electricity, and by being disposed between the bracket 400 and the protrusion portion 210, may perform a function of insulating between the bracket 400 that is electrically connected to the positive electrode terminal 110 and the negative electrode terminal 120 and the protrusion portion 210.

Accordingly, the second insulating member 500 may insulate the cap plate 200 including the protrusion portion 210 from the positive electrode terminal 110 and the negative electrode terminal 120.

As such, when the bracket 400 and the second insulating member 500 are disposed inside the protrusion portion 210, the protrusion portion 210 may be bent at least in part to restrain the bracket 400.

That is, as illustrated in FIG. 16, the protrusion portion 210 may be bent at least in part to press the bracket 400 so as to prevent the bracket 400 from moving.

At this time, the bracket 400 is pressed by the bent protrusion portion 210 so that movement is prevented, and the positive electrode terminal 110 is prevented from being moved in a direction away from the current collector 100 as the protrusion portion 112 is received in the receiving groove 410 of the bracket 400.

Accordingly, by bending the protrusion portion 210 to press the bracket 400, movement of the positive electrode terminal 110 may be prevented.

Likewise, by bending the protrusion portion 210 to press the bracket 400, movement of the negative electrode terminal 120 may also be prevented.

To bend the protrusion portion 210, a bending mechanism and a pressing mechanism may be used, and this configuration is identical to the configuration in which a bending mechanism and a pressing mechanism are used to bend the protrusion portion 21 in the cap assembly 3 of the secondary battery described above; therefore, detailed description will be omitted below.

The cap plate 200 and the positive electrode terminal 110 and the cap plate 200 and the negative electrode terminal 120 may be configured to be insulated from each other.

As such, the configuration of spacing apart the cap plate 200 and the positive electrode terminal 110 to insulate them, and the configuration of spacing apart the cap plate 200 and the negative electrode terminal 120 to insulate them, are identical to the configurations of spacing apart the cap plate 20 and the positive electrode terminal 11 and spacing apart the cap plate 20 and the negative electrode terminal 12 in the cap assembly 3 of the secondary battery described above; therefore, detailed description will be omitted below.

Meanwhile, instead of insulating the positive electrode terminal 110 and the negative electrode terminal 120 from the cap plate 200 by preventing the positive electrode terminal 110 and the negative electrode terminal 120 from contacting the cap plate 200, an insulating member 600 may be provided to insulate the positive electrode terminal 110 and the negative electrode terminal 120 from the cap plate 200.

That is, insulating members 600 may be respectively disposed between the cap plate 200 and the positive electrode terminal 110, and between the cap plate 200 and the negative electrode terminal 120.

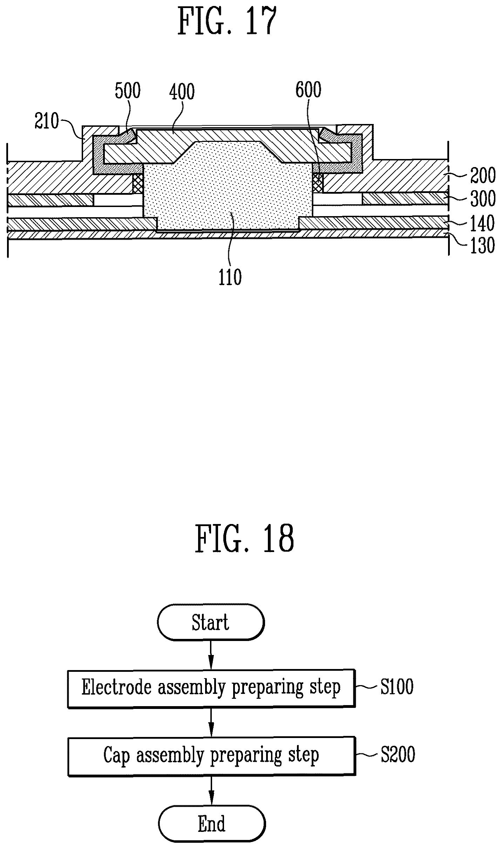

FIG. 17 is a view illustrating a part of a side cross-sectional view of a cap assembly of a secondary battery according to another embodiment of the present disclosure, showing a state in which an insulating member is disposed.

Specifically, as illustrated in FIG. 17, an insulating member 600 formed of a material that does not conduct electricity may be disposed between the positive electrode terminal 110 penetrating the cap plate 200 and the cap plate 200, thereby insulating the positive electrode terminal 110 and the cap plate 200.

Likewise, an insulating member 600 may be disposed between the negative electrode terminal 120 penetrating the cap plate 200 and the cap plate 200, thereby insulating the negative electrode terminal 120 and the cap plate 200.

Hereinafter, the operation and effect of the cap assembly of the secondary battery according to the present disclosure will be described.

The positive electrode terminals 11 and 110 and the negative electrode terminals 12 and 120 of the current collectors 10 and 100 penetrate the first insulating members 30 and 300 and then penetrate the cap plates 20 and 200.

At this time, the protrusion portions 21 and 210 formed on the cap plates 20 and 200 are configured to surround the positive electrode terminals 11 and 110 and the negative electrode terminals 12 and 120 that penetrate the cap plates 20 and 200.

The bracket 40 is respectively disposed between the protrusion portion 21 and the positive electrode terminal 11, and between the protrusion portion 21 and the negative electrode terminal 12, and is restrained as the protrusion portion 21 is bent, thereby preventing movement of the positive electrode terminal 11 and the negative electrode terminal 12.

The bracket 400 is disposed inside the protrusion portion 210 so as to respectively cover the positive electrode terminal 110 and the negative electrode terminal 120, and is restrained as the protrusion portion 210 is bent, thereby preventing movement of the positive electrode terminal 110 and the negative electrode terminal 120.

In addition, since the cap plates 20 and 200 and the positive electrode terminals 11 and 110 and the negative electrode terminals 12 and 120 are configured so that they do not contact each other, the cap plates 20 and 200 may be insulated from the positive electrode terminals 11 and 110 and the negative electrode terminals 12 and 120 without separately disposing insulating members between the cap plates 20 and 200 and the positive electrode terminals 11 and 110 and the negative electrode terminals 12 and 120.

At this time, the brackets 40 may be configured to more effectively prevent the cap plates 20 and 200 from contacting the positive electrode terminals 11 and 110 and the negative electrode terminals 12 and 120.

As such, since the protrusion portions included in the cap plates are bent so as to restrain the brackets that restrain movement of the electrode terminals, the electrode terminals may be coupled to the cap plates without performing a welding process, thereby providing an effect of reducing manufacturing cost of the cap assembly.

In addition, since the electrode terminals may be coupled to the cap plates without performing a welding process, time required to perform the welding process is not consumed, thereby providing an effect of reducing manufacturing time of the cap assembly.

Furthermore, since the electrode terminals and the cap plates may be insulated without disposing an insulating member between the electrode terminals and the cap plates, an effect of reducing cost for disposing insulating members in the cap assembly may be provided.

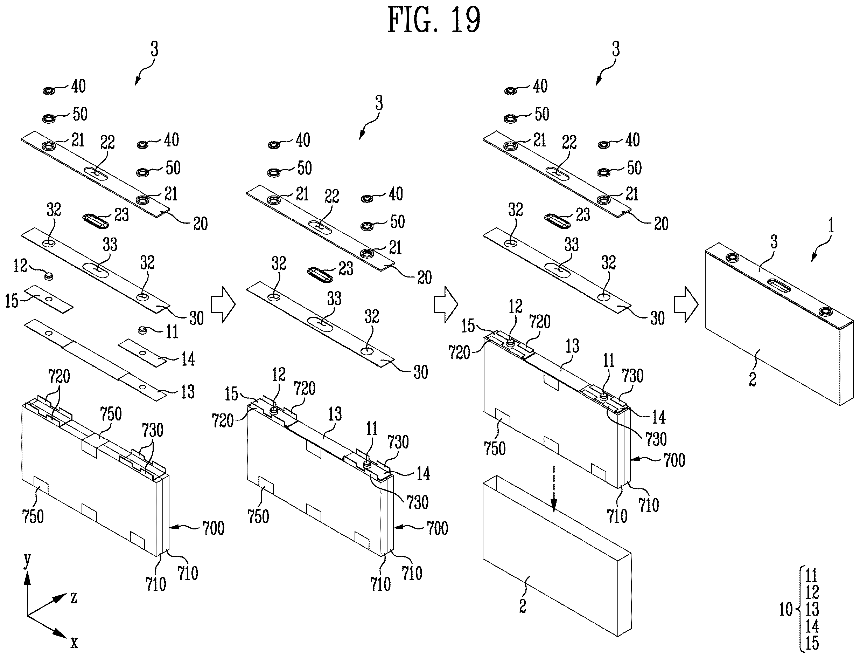

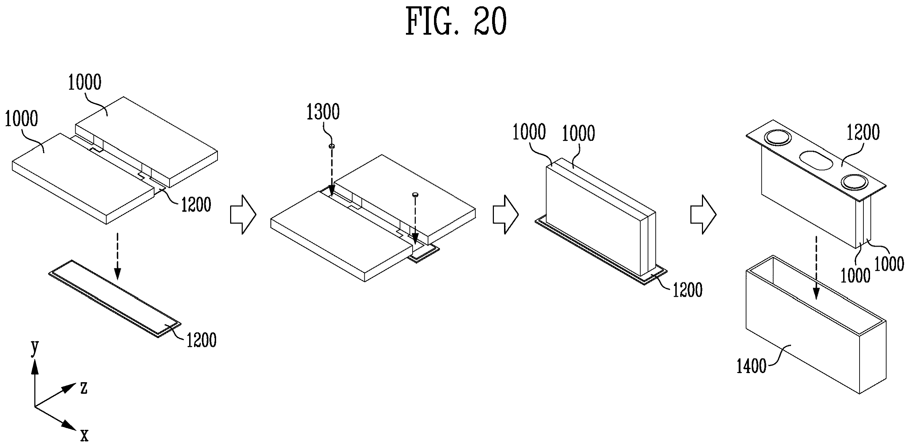

FIG. 18 is a flowchart illustrating a method of manufacturing a secondary battery according to an embodiment of the present disclosure. FIG. 19 is a schematic view illustrating the method of manufacturing a secondary battery of FIG. 18. FIG. 20 is a schematic view illustrating a conventional method of manufacturing a secondary battery.

Referring to FIG. 18, a method of manufacturing a secondary battery according to an embodiment of the present disclosure includes an electrode assembly preparing step S100 of aligning one or more electrode assemblies having a positive electrode and a negative electrode on one surface so that the positive electrode and the negative electrode face a first direction, and a cap assembly providing step S200 of providing a cap assembly electrically connected to the electrode assembly while maintaining the positive electrode and the negative electrode of the electrode assembly in the first direction.

The cap assembly may be the cap assembly of the secondary battery according to the above-described embodiments. Hereinafter, the description will be made using the cap assembly according to FIGS. 1 to 10, but the present disclosure is not limited thereto and may also be applied to cap assemblies according to other embodiments.

Referring to FIGS. 18 and 19, in the electrode assembly preparing step S100, one or more electrode assemblies 700 may be aligned in the first direction. The electrode assembly 700 may include a positive electrode plate, a negative electrode plate, and optionally a separator, having different polarities.

For example, the electrode assembly 700 may include a positive electrode 710 and a negative electrode 720. The positive electrode 710 and the negative electrode 720 may be provided side by side in the electrode assembly 700 so as to face the first direction (y-direction). Specifically, when the positive electrode 710 and the negative electrode 720 are provided at an upper side in the electrode assembly 700, the electrode assembly 700 may be aligned such that the positive electrode 710 and the negative electrode 720 face the upper side.

The electrode assembly 700 may be provided as two or more assemblies. For example, when the electrode assembly 700 is provided as a pair, the pair of electrode assemblies 700 may be provided such that the respective positive electrodes 710 and negative electrodes 720 face each other, and may be fixed by an insulating sheet 750 such as an insulating tape.

In the cap assembly providing step S200, a cap assembly 3 may be provided at an upper side of the electrode assembly 700 aligned in the first direction.

As described above, the cap assembly 3 may include a current collector 10, a cap plate 20, a first insulating member 30, a bracket 40, and a second insulating member 50.

The current collector 10 may include an insulating portion 13, a positive electrode plate 14, a negative electrode plate 15, a positive electrode terminal 11, and a negative electrode terminal 12.

The cap plate 20 may be provided with a first through-hole and a second through-hole through which the positive electrode terminal 11 and the negative electrode terminal 12 protrude, and a protrusion portion 21 may be provided on an outer circumference of the first through-hole and the second through-hole.

The protrusion portion 21 may be provided to surround side surfaces of the positive electrode terminal 11 and the negative electrode terminal 12.

In addition, a vent hole may be provided between the first through-hole and the second through-hole in the cap plate 20.

The first insulating member 30 may be interposed between the current collector 10 and the cap plate 20.

The first insulating member 30 may include a first opening 31 and a second opening 32 so that the positive electrode terminal 11 and the negative electrode terminal 12 may be exposed upward.

In addition, the first insulating member 30 may include a third opening 33 into which the vent 23 may be inserted.

The positive electrode 710 and the negative electrode 720 may have an L-shaped cross-section perpendicular to the first direction, and when the pair of electrode assemblies 700 are provided facing each other and fixed, the positive electrodes 710 and negative electrodes 720 may each be provided to face each other in a U-shaped form.

An insulating portion 13 may be provided in the U-shaped form formed by the positive electrode 710 of one electrode assembly 700 and the positive electrode 710 of another electrode assembly 700, and in the U-shaped form formed by the negative electrode 720 of one electrode assembly 700 and the negative electrode 720 of another electrode assembly 700.

On an upper side of the insulating portion 13, the positive electrode plate 14 and the positive electrode terminal 11 may be provided at a portion corresponding to the positive electrode 710, and the negative electrode plate 15 and the negative electrode terminal 12 may be provided at a portion corresponding to the negative electrode 720.

After the positive electrode plate 14 and the positive electrode terminal 11 are provided, the positive electrode 710 may be bent to fix the positive electrode plate 14 and the positive electrode terminal 11.

In addition, after the negative electrode plate 15 and the negative electrode terminal 12 are provided, the negative electrode 720 may be bent to fix the negative electrode plate 15 and the negative electrode terminal 12.

After the positive electrode terminal 11 and the negative electrode terminal 12 are bent, a first insulating member 30 and a cap plate 20 are sequentially provided on an upper side of the electrode assembly 700, and the electrode assembly 700 may be accommodated in the case 2.

The cap plate 20 may be connected to the case 2.

In the method of manufacturing a secondary battery according to another embodiment of the present disclosure, the electrode assembly 700 may be manufactured into the secondary battery 1 in a form in which the positive electrode 710 and the negative electrode 720 are aligned to face the first direction.

The cap assembly 3 of the secondary battery according to the present embodiment may be manufactured into the secondary battery 1 by providing the cap assembly 3 on an upper side of the electrode assembly 700 while maintaining the first direction without a change in the alignment direction of the electrode assembly 700, to thereby facilitate assembly of one or more electrode assemblies 700 aligned in the first direction.

Referring to FIG. 20, in the conventional method of manufacturing a secondary battery, a cap assembly different from the cap assembly according to the present disclosure was used, and the manufacturing method was therefore different.

Specifically, conventionally, a pair of electrode assemblies 1000 was provided so that a wide surface was positioned at a bottom side and the positive electrode and the negative electrode faced each other.

As a result, the connection form of the pair of electrode assemblies 1000 was such that the upper surfaces of the electrode assemblies 1000 faced each other and a cap assembly 1200 was connected therebetween.

Subsequently, the cap assembly 1200 was moved to be located at a lower side (-y direction) by moving the lower surface of the electrode assembly 1000 to an upper side (y direction).

Thereafter, the positive electrode and the negative electrode of each of the pair of electrode assemblies 1000 were welded to the cap assembly 1200, and an insulating solution 1300 was applied to assemble them.

As a result, the electrode assembly 1000 was provided such that the cap assembly 1200 was positioned at a lower side, the bottom surface of the electrode assembly 1000 was positioned at an upper side, and was then accommodated in the case 1400 and sealed.

That is, the conventional method of manufacturing a secondary battery is different from the present disclosure in that the direction of the electrode assembly 1000 changes from the z direction to the y direction while being welded to the cap assembly 1200, and then its position is inverted to the -y direction to be accommodated in the case 1400, so that problems such as damage to the electrode assembly 1000 may occur during the process.

In contrast, in the method of manufacturing a secondary battery according to the embodiment of the present disclosure, the cap assembly 3 is assembled while the positive electrode 710 and the negative electrode 720 of the electrode assembly 700 are maintained in the first direction (y direction), and the electrode assembly 700 may be accommodated in the case 1400, and the electrode assembly 700 may maintain the first direction without changing its direction.

In addition, in the method of manufacturing a secondary battery according to the embodiment of the present disclosure, movement of the electrode assembly 700 is minimized, so that the electrode assembly 700 may be prevented from being damaged by external force or the like.

It is understood by those skilled in the art that the plurality of exemplary embodiments described above are specific examples of the following aspects.

Aspect 1. A cap assembly of a secondary battery comprising: a current collector including a positive electrode terminal that is electrically connected to a positive electrode of an electrode assembly and a negative electrode terminal that is electrically connected to a negative electrode of the electrode assembly; a cap plate which the positive electrode terminal and the negative electrode terminal penetrate and which includes a protrusion portion respectively surrounding an outer circumference of the positive electrode terminal and an outer circumference of the negative electrode terminal; a first insulating member which the positive electrode terminal and the negative electrode terminal penetrate and which is disposed between the current collector and the cap plate; a bracket respectively disposed between the protrusion portion and the positive electrode terminal and between the protrusion portion and the negative electrode terminal; and a second insulating member respectively disposed between the bracket and the protrusion portion.

Aspect 2. The cap assembly of a secondary battery according to aspect 1, wherein the bracket includes a hole or a groove, and a cross-section of the bracket parallel to the cap plate includes any one or more of a circular shape, an elliptical shape, a triangular shape, a quadrangular shape, and a polygonal shape.

Aspect 3. The cap assembly of a secondary battery according to aspect 1 or 2, wherein the positive electrode terminal and the negative electrode terminal are respectively formed with a step so as to have a seating surface on which the bracket is seated, and wherein the protrusion portion is bent at least in part so as to press the bracket such that movement of the bracket is prevented.

Aspect 4. The cap assembly of a secondary battery according to any one of the previous aspects, wherein the positive electrode terminal and the negative electrode terminal are respectively formed such that a cross-section in a horizontal direction which is a direction parallel to one surface of the cap plate is circular, and wherein the cap plate is formed such that, in order to prevent contact with the positive electrode terminal, a diameter of the cross-section in the horizontal direction of a first through-hole through which the positive electrode terminal penetrates is larger than a diameter of the cross-section in the horizontal direction of the positive electrode terminal located in the first through-hole, and in order to prevent contact with the negative electrode terminal, a diameter of the cross-section in the horizontal direction of a second through-hole through which the negative electrode terminal penetrates is larger than a diameter of the cross-section in the horizontal direction of the negative electrode terminal located in the second through-hole.

Aspect 5. The cap assembly of a secondary battery according to aspect 4, wherein the bracket disposed between the protrusion portion and the positive electrode terminal is formed to support at least a portion of an outer circumferential surface of the positive electrode terminal so as to prevent the positive electrode terminal from moving in the horizontal direction, and wherein the bracket disposed between the protrusion portion and the negative electrode terminal is formed to support at least a portion of an outer circumferential surface of the negative electrode terminal so as to prevent the negative electrode terminal from moving in the horizontal direction.

Aspect 6. The cap assembly of a secondary battery according to aspect 4 or 5, wherein a receiving hole having a circular cross-section in the horizontal direction is formed in the bracket such that the positive electrode terminal or the negative electrode terminal penetrates therethrough, and wherein a diameter of the cross-section in the horizontal direction of the positive electrode terminal located in the receiving hole is identical to a diameter of the cross-section in the horizontal direction of the receiving hole, and a diameter of the cross-section in the horizontal direction of the negative electrode terminal located in the receiving hole is identical to a diameter of the cross-section in the horizontal direction of the receiving hole.

Aspect 7. The cap assembly of a secondary battery according to any one of the previous aspects, wherein insulating members are respectively disposed between the cap plate and the positive electrode terminal, and between the cap plate and the negative electrode terminal.

Aspect 8. The cap assembly of a secondary battery according to any one of the previous aspects, wherein the current collector further includes: an insulating portion of which one surface is disposed to face the electrode assembly; a positive electrode plate which is disposed on another surface of the insulating portion and is electrically connected to the positive electrode and the positive electrode terminal; and a negative electrode plate which is disposed on another surface of the insulating portion so as to be spaced apart from the positive electrode plate by a predetermined distance and is electrically connected to the negative electrode and the negative electrode terminal.

Aspect 9. The cap assembly of a secondary battery according to aspect 8, wherein the positive electrode terminal is integrally formed with the positive electrode plate, and wherein the negative electrode terminal is integrally formed with the negative electrode plate.

Aspect 10. The cap assembly of a secondary battery according to any one of the previous aspects, wherein a vent hole is formed in the cap plate, and a vent that is opened when a force equal to or greater than a predetermined size is applied to the vent hole is coupled to the vent hole, and wherein the first insulating member includes one or more openings, and any one or more of the openings is formed at a position facing the vent.

Aspect 11. The cap assembly of a secondary battery according to any one of the previous aspects, wherein the protrusion portion is bent at least in part so as to press the bracket such that movement of the bracket is prevented.

Aspect 12. The cap assembly of a secondary battery according to any one of the previous aspects, wherein the positive electrode terminal and the negative electrode terminal are respectively formed with a protrusion portion protruding toward the bracket, wherein the bracket is respectively formed with a receiving groove that receives the protrusion portion formed on the positive electrode terminal or the protrusion portion formed on the negative electrode terminal, wherein the positive electrode terminal is prevented from moving in the horizontal direction as the protrusion portion of the positive electrode terminal is received in the receiving groove, and wherein the negative electrode terminal is prevented from moving in the horizontal direction as the protrusion portion of the negative electrode terminal is received in the receiving groove.

Aspect 13. A secondary battery including the cap assembly of a secondary battery according to any one of the previous aspects.

Aspect 14. A method of manufacturing of a secondary battery, comprising: an electrode assembly preparing step of aligning one or more electrode assemblies having a positive electrode and a negative electrode on one surface such that the positive electrode and the negative electrode face a first direction; and a cap assembly providing step of providing a cap assembly that is electrically connected to the positive electrode and the negative electrode of the electrode assembly while maintaining the first direction, wherein the cap assembly is the cap assembly of a secondary battery according to any one of aspects 1 to 12.

The above description of the present disclosure is merely for purposes of illustration, and it will be understood that those skilled in the art to which the present disclosure pertains can easily modify the present disclosure into other specific forms without changing the technical spirit or essential characteristics of the present disclosure.

Therefore, the embodiments described above should be understood as exemplary and not limiting in all respects.

For example, each component described as a single form may be implemented in a distributed form, and likewise, components described as distributed may be implemented in a combined form.

The scope of the present disclosure is defined by the claims that follow rather than by the detailed description above, and all modifications or variations derived from the meaning and scope of the claims and their equivalents are to be interpreted as being included within the scope of the present disclosure.

## Claims

1. A cap assembly of a secondary battery comprising:
a current collector including a positive electrode terminal that is electrically connected to a positive electrode of an electrode assembly and a negative electrode terminal that is electrically connected to a negative electrode of the electrode assembly;
a cap plate which the positive electrode terminal and the negative electrode terminal penetrate and which includes a protrusion portion respectively surrounding an outer circumference of the positive electrode terminal and an outer circumference of the negative electrode terminal;
a first insulating member which the positive electrode terminal and the negative electrode terminal penetrate and which is disposed between the current collector and the cap plate;
a bracket respectively disposed between the protrusion portion and the positive electrode terminal and between the protrusion portion and the negative electrode terminal; and
a second insulating member respectively disposed between the bracket and the protrusion portion.

2. The cap assembly of a secondary battery according to claim 1, wherein the bracket includes a hole or a groove, and a cross-section of the bracket parallel to the cap plate includes any one or more of a circular shape, an elliptical shape, a triangular shape, a quadrangular shape, and a polygonal shape.

3. The cap assembly of a secondary battery according to claim 1 or 2, wherein the positive electrode terminal and the negative electrode terminal are respectively formed with a step so as to have a seating surface on which the bracket is seated, and wherein the protrusion portion is bent at least in part so as to press the bracket such that movement of the bracket is prevented.

4. The cap assembly of a secondary battery according to any one of the previous claims,
wherein the positive electrode terminal and the negative electrode terminal are respectively formed such that a cross-section in a horizontal direction which is a direction parallel to one surface of the cap plate is circular, and
wherein the cap plate is formed such that, in order to prevent contact with the positive electrode terminal, a diameter of the cross-section in the horizontal direction of a first through-hole through which the positive electrode terminal penetrates is larger than a diameter of the cross-section in the horizontal direction of the positive electrode terminal located in the first through-hole, and
in order to prevent contact with the negative electrode terminal, a diameter of the cross-section in the horizontal direction of a second through-hole through which the negative electrode terminal penetrates is larger than a diameter of the cross-section in the horizontal direction of the negative electrode terminal located in the second through-hole.

5. The cap assembly of a secondary battery according to claim 4,
wherein the bracket disposed between the protrusion portion and the positive electrode terminal is formed to support at least a portion of an outer circumferential surface of the positive electrode terminal so as to prevent the positive electrode terminal from moving in the horizontal direction, and
wherein the bracket disposed between the protrusion portion and the negative electrode terminal is formed to support at least a portion of an outer circumferential surface of the negative electrode terminal so as to prevent the negative electrode terminal from moving in the horizontal direction.

6. The cap assembly of a secondary battery according to claim 4 or 5,
wherein a receiving hole having a circular cross-section in the horizontal direction is formed in the bracket such that the positive electrode terminal or the negative electrode terminal penetrates therethrough, and
wherein a diameter of the cross-section in the horizontal direction of the positive electrode terminal located in the receiving hole is identical to a diameter of the cross-section in the horizontal direction of the receiving hole, and a diameter of the cross-section in the horizontal direction of the negative electrode terminal located in the receiving hole is identical to a diameter of the cross-section in the horizontal direction of the receiving hole.

7. The cap assembly of a secondary battery according to any one of the previous claims, wherein insulating members are respectively disposed between the cap plate and the positive electrode terminal, and between the cap plate and the negative electrode terminal.

8. The cap assembly of a secondary battery according to any one of the previous claims, wherein the current collector further includes:
an insulating portion of which one surface is disposed to face the electrode assembly;
a positive electrode plate which is disposed on another surface of the insulating portion and is electrically connected to the positive electrode and the positive electrode terminal; and
a negative electrode plate which is disposed on another surface of the insulating portion so as to be spaced apart from the positive electrode plate by a predetermined distance and is electrically connected to the negative electrode and the negative electrode terminal.

9. The cap assembly of a secondary battery according to claim 8, wherein the positive electrode terminal is integrally formed with the positive electrode plate, and wherein the negative electrode terminal is integrally formed with the negative electrode plate.

10. The cap assembly of a secondary battery according to any one of the previous claims, wherein a vent hole is formed in the cap plate, and a vent that is opened when a force equal to or greater than a predetermined size is applied to the vent hole is coupled to the vent hole, and wherein the first insulating member includes one or more openings, and any one or more of the openings is formed at a position facing the vent.

11. The cap assembly of a secondary battery according to any one of the previous claims,
wherein the protrusion portion is bent at least in part so as to press the bracket such that movement of the bracket is prevented.

12. The cap assembly of a secondary battery according to any one of the previous claims,
wherein the positive electrode terminal and the negative electrode terminal are respectively formed with a protrusion portion protruding toward the bracket,
wherein the bracket is respectively formed with a receiving groove that receives the protrusion portion formed on the positive electrode terminal or the protrusion portion formed on the negative electrode terminal,
wherein the positive electrode terminal is prevented from moving in the horizontal direction as the protrusion portion of the positive electrode terminal is received in the receiving groove, and
wherein the negative electrode terminal is prevented from moving in the horizontal direction as the protrusion portion of the negative electrode terminal is received in the receiving groove.

13. A secondary battery including the cap assembly of a secondary battery according to any one of the previous claims.

14. A method of manufacturing of a secondary battery, comprising:
an electrode assembly preparing step of aligning one or more electrode assemblies having a positive electrode and a negative electrode on one surface such that the positive electrode and the negative electrode face a first direction; and
a cap assembly providing step of providing a cap assembly that is electrically connected to the positive electrode and the negative electrode of the electrode assembly while maintaining the first direction,
wherein the cap assembly is the cap assembly of a secondary battery according to any one of claims 1 to 12.
